# EUROPEAN PATENT SPECIFICATION

(11) **EP 1 430 686 B1**
(45) Date of publication and mention of the grant of the patent: **28.11.2007**
(21) Application number: 02772735.3
(22) Date of filing: 27.09.2002
(51) Int. Cl.: H04L 29/06, H04L 29/12, H04Q 7/32, H04Q 3/00

(54) **IMPROVED INTERCONNECTION OF IP NETWORKS**
VERBESSERTE VERBINDUNG VON IP-NETZEN
INTERCONNEXION AMELIOREE DE RESEAUX IP

(30) Priority: 28.09.2001 GB 0123371
(43) Date of publication of application: 23.06.2004
(73) Proprietor: Spyder Navigations LLC, Wilmington, DE 19801 (US)
(72) Inventor: LOUGHNEY, John, FIN-02200 Espoo (FI)
(74) Representative: Shackleton, Nicola
(86) International application number: PCT/IB2002/004192
(87) International publication number: WO 2003/030491

(56) References cited:
- WO-A-00/69140

## Description

The present invention relates to internet protocol (IP) networks, and more particularly to the interfacing of mobile wireless Internet protocol (IP) networks via the Internet.

In third generation (3G) mobile networks, architectures are being specified which have all Internet protocol (IP) communication. In order to have communication between networks associated with different operators, it is necessary to provide a transport structure for IP communication between those different networks.

Various transport bearer services are well-known for providing a control plane bearer for services between different IP networks. An example of one such transport bearer service is the stream control transmission protocol (SCTP). SCTP was originally designed with Signalling System #7 (SS7) over Internet Protocol (IP) in mind. However SCTP has evolved through extensions to be a protocol suitable for any service that wants to take advantage of multi-homing. As such its use has been proposed for IP networks.

The known use of the SCTP protocol relies upon direct communication between network elements, from an element in one network to an element in another network. In utilising the SCTP protocol in IP networks, however, such a technique has certain drawbacks. The addressing of some IP networks, e.g. 3G Core Networks, may be private and/or confidential. When connection between network elements of different operators is needed, the private addressing schemes of the network may not allow direct connection between network elements. Therefore, the known SCTP protocol is not suitable.

Furthermore, there may be business/commercial reasons why a direct connection between network elements of different operators is undesirable, for example, to ensure that network structures are hidden.

Scalability issues are also a concern. The proposed network element - to - network element approach may result in a large number of ad hoc interconnections between networks.

It is therefore an aim of the present invention to provide an improved technique for interconnecting IP networks via internets that overcomes the above-stated problems.

WO 00/69140 discloses a method of establishing communication sessions with other users or services, running either over IP networks or other networks, e.g., PSTN. The network can broker communication services between two or more users and/or services. A plurality of different clusters of servers is provided, and each of the clusters may be linked together. Each cluster includes multiple servers. Users are registered within some specific cluster and given a unique system/network ID. Messages are not sent directly between users, but instead through at least one intermediate routing service provided on a server of one of the users.

According to one aspect the present invention provides a broker entity for a first IP network the first IP network being adapted to communicate with a second IP network via at least one data network, wherein the broker entity is adapted to act as a gateway for the first IP network, such that communication between the first IP network and the second IP network is via the broker entity, characterized in that:
the broker entity is adapted to perform protocol conversion, the first IP network and the second IP network not being compatible;
the broker entity is adapted to operate under SCTP and the M3UA user application protocol.

Said broker entity may be common to the second IP network, or the second IP network may be provided with a second broker entity. Communication between the first and second IP networks may be via the first and second brokers.

The data network, or internet, is preferably one of: the Internet, an intranet, or an extranet.

The broker entity may contain a connection manager. The broker entity may further include a traffic filter. The traffic filter may act as a firewall. The broker entity may include a load balancer. The broker entity may include an address selector. The address selector may select a network endpoint.

The network is preferably a wireless network.

According to a further aspect the present invention provides a method of communicating between a first IP network and a second IP network via at least one data network, the method comprising providing a broker entity, wherein the broker entity acts as a gateway for the first IP network, such that communication between the first and second IP networks is via the broker entity, characterized in that the method further comprises:
performing protocol conversion if the first IP network and the second IP network are not compatible, and,
operating the broker entity under SCTP and an M3UA user application protocol.

The broker entity may perform connection management between the local network and foreign networks. The broker entity may perform traffic filtering. The traffic filtering may be performed by a firewall. The broker entity may perform load balancing. The broker entity may perform address selection. The address selection may identify a network endpoint.

The present invention thus provides a general broker architecture that may be used with SCTP to solve addressing issues, privacy issues, and scalability issues for signalling transport between multiple operator networks.

Brokers are preferably used between core networks as a way to allow private addressing and to allow scalability in global 3G networks. The brokers may be used for specific network elements, for example, just home location resisters (HLRs), or to allow all network elements within a core network that may need connection to elements outside of their own network.

The invention will now be described by way of example, with reference to the accompanying drawings, in which:
Figure 1 illustrates functional blocks of a first embodiment of the present invention, utilising a common broker;
Figure 2 illustrates the protocol layers for the embodiment of Figure 1;
Figure 3 illustrates functional blocks of a second embodiment of the present invention, utilising multiple brokers;
Figure 4 illustrates the protocol layers for the embodiment of Figure 3; and
Figure 5 illustrates an example of a message flow in accordance with the invention in the embodiment of Figure 1.

The present invention is described herein with reference to particular network environments. It will be understood, however, that the invention is more broadly applicable and may apply to any wireless IP network which interfaces with another wireless IP network via data networks.

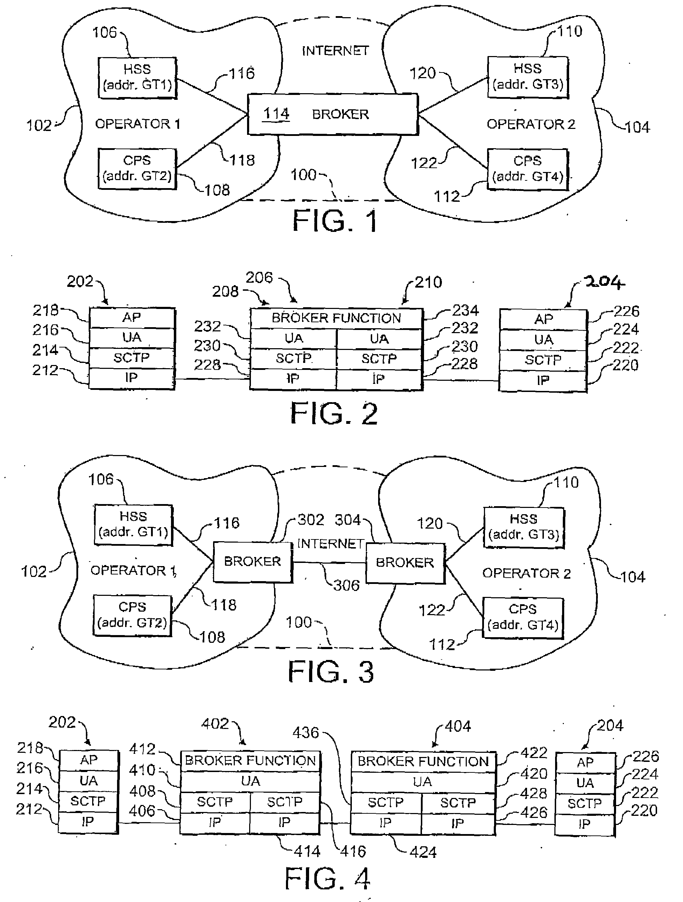

Referring to Figure 1 there is illustrated the functional blocks of a first example implementation of the present invention. A first network operated by a first network operator is generally designated by reference numeral 102. A second network operated by a second network operator is generally designated by reference numeral 104. Each of the first and second networks is an IP network. The respective networks 102 and 104 are distinct, independent networks with no common elements or connections there between. However, communication between the two networks is provided (in this example) via the Internet, generally designated by reference numeral 100.

Each network includes various network elements, which will be familiar to one skilled in the art. Only those network elements required for understanding the present invention are shown in Figure 1. The network 102 includes a home subscriber server (HSS) 106 and a call-processing server (CPS) 108. Similarly the network 104 includes a HSS 110 and a CPS 112.

The home subscriber servers store subscriber related information of the respective networks. The subscriber information may include data such as registration identities (ID) of the subscriber or the terminals in the network, and their current status.

The call processing servers are examples of users of the services provided in the particular network. The term user refers to any client who may use the service or functionality provided by the network operator or a network entity in one of the domains of the network operator.

In accordance with an embodiment of the present invention, there is provided a broker entity 114 associated with, and common to, both of the networks 102 and 104. Each of the HSS 106 and the CPS 108 of the first network are connected to the common broker entity 114 via respective communication links 116 and 118. Each of the HSS 110 and the CPS 112 of the second network are connected to the common broker entity 114 via respective communication links 120 and 122.

The respective HSS and CPS entities communicate with the broker entity 114 on the communication links 116, 118, 120 and 122 using an appropriate known application protocol (AP), for example MAP over TCAP or CAP over TCAP. In the illustrative example shown in Figure 1, it is assumed that the application protocol used is MAP over IP.

The communication link 116 represents a first SCTP association, the communication link 118 represents a second STCP association, the communication link 120 represents a third STCP association, and the communication link 122 represents a fourth SCTP association.

In the example of Figure 1, the broker entity also utilises a MAP over IP protocol, establishing a fifth SCTP association between the respective networks.

The broker entity is preferably a host running SCTP over IP, with the necessary user application protocol (e.g. M3UA, SUA, etc.).

The broker entity is used when a mobile user normally connected in one network is temporarily connected in another network - a foreign network. For example, a mobile user normally connected in network 102 may be temporarily connected in network 104.

In such a scenario the mobile user registered in the foreign network must communicate with its home network in order to access, for example, accounting records, authorization information, subscriber data and settings, and services in the home network. In accordance with the described embodiment of the present invention, this information is accessed by communications sent via the broker entity 114.

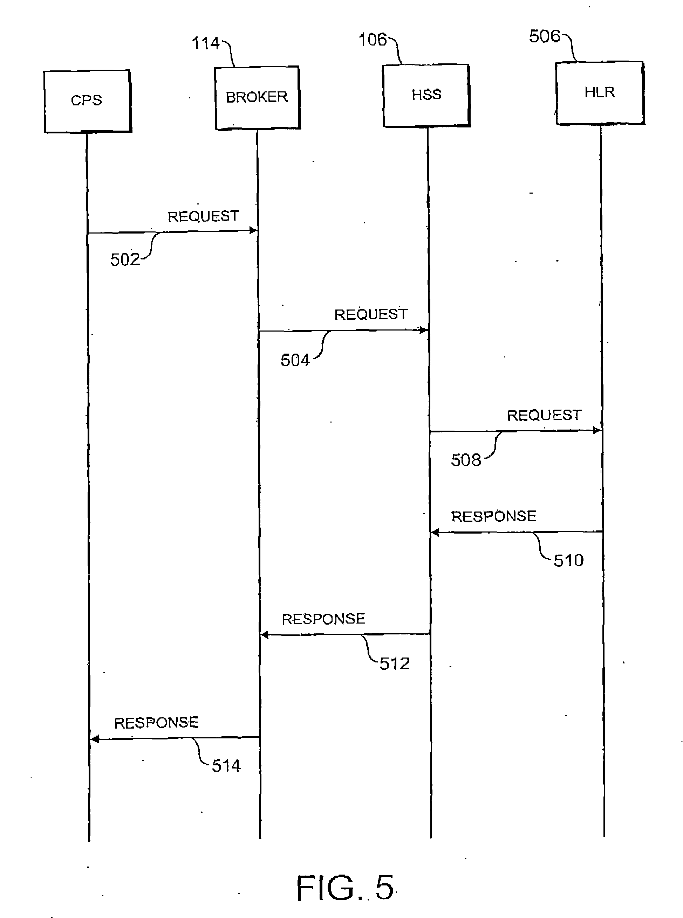

For the purpose of understanding the present invention, an example communication between the two operator networks of Figure 1 will now be described with additional reference to Figure 5. For the purposes of this example it is assumed that a mobile user for which the first network 102 is the home network, is currently in the area of operator 2 and wishes to be connected in the second network 104.

In accordance with known techniques, the mobile user attempts to register with the second network 104. The call processing server (CPS) 112 of the second network 104 then carries out the appropriate functional steps to determine if the mobile user may be connected in the second network. In accordance with known techniques, the mobile user provides the call processing server of the second network with information identifying it's home network, in this case the first network 102. As part of the registration of the mobile user in the second network 104, the call processing server 112 must check the subscription data of the mobile user. To do this, the call-processing server 112 must verify subscription data of the mobile user with its home network.

In accordance with this embodiment of the present invention, the call processing server 112 sends a request to the first network 102 via the common broker 114. The request, as represented by signal 502 in Figure 5, is a request to check the subscription data for the mobile user.

The common broker 114 is configured to accept all signalling connections from the second network which are intended for the first network. The common broker can filter out any other messages, for example by using a firewall functionality. The common broker may also be used to limit the connection of other operators to a network with which it is associated.

The common broker 114 analyses any received message and if it determines that the message is for receipt by a network for which it acts as broker, then determines which network element of that network the message should be forwarded to. If implemented, the common broker may utilise a load-sharing/ load balancing mechanism in determining where the message should be sent.

In the present described example, the request message is forwarded by the common broker to the home subscriber server 106, as represented by signal 504 in Figure 5.

A home location register (HLR) associated with the home subscriber server, represented as a functional block 506 in Figure 5, receives the request message as represented by signal 508.

The home location register handles the request message by confirming the mobile user's subscriber information. The handling of the request message by the home location register is in accordance with known techniques.

As represented by message 510, the home location register sends a reply to the home subscriber server, which in turn sends a reply message to the common broker, as represented by message 512.

The common broker then forwards the reply to the original requestor, in this case the call-processing server 112, as represented by message 514.

It accordance with the present invention, the broker entity provides interconnection services between different operator networks; addressing functionality between the different operator networks; and simplifies the interconnection between different operator networks.

The broker entity may also provide, in embodiments, load sharing; network confidentiality; security functionality (i.e. - firewall functions); and a way for operators to dynamically provide inter-work and roaming capacities.

In the example described hereinabove with reference to Figures 1 and 5, the broker may hide the exact configuration data of the second network for the first network in the process of transmitting messages. In this way the broker may prevent information about one network being visible to another network.

The location of the common broker entity 114 in the embodiment of Figure 1 is implementation dependent. For example, the broker may be provided In on a third party server entirely independent of the networks, or it may be provided on a server having functionality split across the networks with which it is associated.

Referring to Figure 2, there is illustrated the protocol stack for the communication arrangement of Figure 1.

Generally illustrated by block 202 there is shown the protocol layers in the first network for communication with the broker entity. Generally illustrated by block 204 there is shown the protocol layers in the second network for communication with the broker entity. Generally illustrated by block 206 there is illustrated the protocol stack of the broker entity, having a portion 208 associated with the first network and a portion 210 associated with the second network.

The protocol layers 202 in the first network comprise an Internet protocol (IP) layer 212, a SCTP layer 214, a UA layer 216 and an application protocol (AP) layer 218. The protocol layers 204 in the second network comprise an Internet protocol (IP) layer 220, a SCTP layer 222, a UA layer 224 and an application protocol (AP) layer 226. Each of the protocol layers of the broker entity comprises an Internet protocol (IP) layer 228, an SCTP layer 230, and a user application (UA) layer 232. The broker entity also includes a broker function 234.

The protocol stack layers shown in blocks 202 and 204 illustrate conventional protocol stacks. Figure 2 shows that the first and second networks have a 'user application' layer. In practice, the user application layer for each network may differ, and the appropriate application layer in the broker entity will mirror the application layer in the network. The broker function, represented by layer 234, takes place above the application layer. As discussed hereinabove the broker function may include functionality to remove or hide information concerning the structure of the two or more networks interconnected by the broker.

The SCTP and IP layers 230 and 228 represent the SCTP-over-IP transmission.

The protocol stack shown in Figure 2 does not illustrate any modifications over a conventional protocol stack structure. The present invention resides in the implementation of the broker function in the layer 234.

Referring to Figure 3, a further example implementation of the present invention is shown. In Figure 3, like reference numerals are used to illustrate elements corresponding to those shown in Figure 1. The example implementation of Figure 3 differs from that of Figure 1 in that a shared or common broker is not provided. Instead, the respective first and second networks are provided with first and second brokers, identified by reference numerals 302 and 304. The first and second brokers are linked together by a communication link, as represented by line 306.

The principle of operation of the brokers 302 and 304 as shown in Figure 3 is the same as that of the common broker 114 of Figure 1.

In an arrangement such as is shown in Figure 3, all communications between the respective networks may be provided via the respective brokers. Thus when a mobile user having the first network 102 as its home network is to be connected in the second network 104, the call processing server 112 forwards a request message to the broker 304, which in turn forwards the request message to the broker 302. The broker 304 is configured to carry out the broker functionality of removing any information from the communication which is to be hidden from the other network. The request message received by the broker 302 is processed and forwarded to the appropriate network element in the first network as described hereinabove with reference to Figure 1.

In an alternative, when a mobile user registers in a foreign network, the call-processing server in that foreign network may communicate directly with the broker associated with the home network of the mobile user.

Whilst the invention may utilised with a network having a broker entity communicating with a network not having a broker entity, the preferable implementation of the invention is for use in communication between networks having respective broker entities or shared brokers.

For completeness, Figure 4 illustrates the protocol stack for the example of Figure 3. Again like reference numerals refer to elements in Figure 4 which correspond to elements in Figure 2. The protocol stacks 202 and 204 associated with the first and second networks are identical to those of Figure 2.

As two separate brokers are provided in Figure 3, there is shown in Figure 4 a protocol stack corresponding to each of the brokers.

Protocol stack 402 refers to the broker 302, and includes a broker function 412 and a UA layer 410. The network side of the broker has an IP layer 406, and an SCTP Layer 408 for SCTP over IP transmission within the network, and the broker side of the has an IP layer 414 and an SCTP Layer 416 for SCTP over IP transmissions external to the network.

Protocol stack 404 refers to the broker 304, and includes a broker function 422 and a UA layer 420. The network side of the broker has an IP layer 426, and an SCTP Layer 428 for SCTP over IP transmission within the network, and the broker side of the has an IP layer 424 and an SCTP Layer 436 for SCTP over IP transmissions external to the network.

The broker entities used by the present invention are required to be reachable by other brokers, for example other brokers in a global 3G network. Each broker must manage SCTP connections to other brokers. Each broker must also have the functionality to multiplex SCTP-data from several sources, and establish new connections when needed.

The user adaptation protocols are required to reach the brokers and translate between private addresses and public addresses.

There are many advantages associated with the present invention. The broker entity, acting as a signalling broker, simplifies the signalling connection management between networks. Network elements only need connections to a broker, not to all of the network elements in other networks. Thus the broker entity preferably provides connection management between the local and foreign networks.

The broker may apply filtering rules to eliminate unwanted signalling into the operator's network. The broker may thus include a traffic filter. The traffic filter may be utilised to block certain traffic. This may be implemented, for example, as a firewall. The implementation of such a traffic filter will be familiar to one skilled in the art.

If duplicate network elements are provided in a network, the broker associated with that network may use load sharing or load-balancing mechanisms to distribute the processing load amongst those network elements having duplicate functionality. To provide such functionality, the broker entity may be provided with a load balancer. The implementation of such a load balancer will be familiar to one skilled in the art.

In order to ensure the correct direction of traffic, the broker entity is also preferably provided with an address selector. This may, in particular, be used in conjunction with the load balancer. The address selector selects the endpoint address within the network.

The use of the broker entities also simplifies external addressing. Other network operators only need to maintain the address of the broker of a particular network, rather than the address of all the elements within that network.

The provision of the broker entity advantageously acts as a gateway for a network. The broker entity allows: the network structure to be hidden; the possibility of insertion of a firewall; the multiplexing of traffic; and possibility of performing protocol conversion if networks are not compatible.

There are many operators operating IP networks. The provision of a broker entity according to the present invention facilitates an efficient management of connections to many or all network elements in different operator networks, and thereby avoids huge scalability problems which would otherwise exist. Without the provision of a broker entity according to the present invention, the scalability problems are such that connection management between network elements would be inoperable.

The broker entity furthermore advantageously provides a technique for distributing information about new network elements, or performing change-over procedures. By placing all the network elements behind a single broker entity, scalability problems are solved by the limitation of connections to broker entity-to-broker entity.

In addition, the invention allows network operators flexibility to configure and maintain their networks behind the broker entity. As such, it is easier to add and remove network elements as only the broker entity needs to be informed of such changes, as opposed to all of the network elements in all of the operator networks.

It should be noted that whilst the present invention is described herein with reference to particular examples, it is not limited to such examples. The data network between IP networks may not be the Internet, but may be other forms of internet such as an intranet or an extranet. One skilled in the art will appreciate the general applicability of the present invention, which is limited in scope only by the appended claims.

## Claims

1. A broker entity (114) for a first IP network (102) the first IP network being adapted to communicate with a second IP network (104) via at least one data network, wherein the broker entity is adapted to act as a gateway for the first IP network, such that communication between the first IP network and the second IP network is via the broker entity, **characterized in that**:
the broker entity is adapted to perform protocol conversion between the first IP network and the second IP network, the first IP network and the second IP network not being compatible; and
the broker entity is adapted to operate under SCTP and the M3UA user application protocol.

2. The broker entity of claim 1, wherein said broker entity (114) is common to the first IP network (102) and the second IP network (104).

3. The broker entity of claim 1, wherein the first and second networks (102,104) are provided with first and second broker entities (302, 304) respectively.

4. The broker entity of claim 3, wherein communication between the first and second IP networks (102, 104) is via the first and second brokers (302, 304).

5. The broker entity of any preceding claim, wherein the data network (100) is one of: the Internet, an intranet, or an extranet.

6. The broker entity of any preceding claim, further including a traffic filter.

7. The broker entity of claim 6, wherein the traffic filter includes a firewall.

8. The broker entity of any preceding claim, further including a load balancer.

9. The broker entity of any preceding claim, further including an address selector.

10. The broker entity of claim 9, wherein the address selector selects a network endpoint.

11. The broker entity of any preceding claim further including a connection manager.

12. The broker entity of any preceding claim, wherein the first and second IP networks (102,104) are wireless networks.

13. The broker entity of any preceding claim, wherein the broker entity (114) is adapted to allow multiplexing of traffic.

14. The broker entity of any preceding claim, wherein the broker entity (114) is a signalling broker adapted for signalling.

15. A method of communicating between a first IP network (102) and a second IP network (104) via at least one data network (100), the method comprising providing a broker entity (114), wherein the broker entity acts as a gateway for the first IP network, such that communication between the first and second IP networks is via the broker entity, **characterized in that** the method further comprises:
performing protocol conversion if the first IP network and the second IP network are not compatible, and,
operating the broker entity under SCTP and an M3UA user application protocol.

16. The method according to claim 15, wherein said broker entity (114) is common to the first IP network (102) and the second IP network (104).

17. The method according to claim 15 or claim 16, wherein the first and second IP networks (102,104) are provided with first and second broker entities (302,304) respectively.

18. The method of any one of claims 15 to 17, wherein the data network (100) is one of: the Internet, an intranet, or an extranet.

19. The method of any one of claims 15 to 18, wherein the broker entity (114) performs traffic filtering.

20. The method of claim 19, wherein the traffic filtering is performed by a firewall.

21. The method of any one of claims 15 to 20, wherein the broker entity performs load balancing.

22. The method of any one of claims 15 to 21, wherein the broker entity performs address selection.

23. The method of claim 22, wherein the address selection identifies a network endpoint.

24. The method of any one of claims 15 to 23, wherein the broker entity performs connection management.

25. The method of any of claims 15 to 24, wherein the broker entity (114) allows multiplexing of traffic.

26. The method of any of claims 15 to 25, wherein the broker entity (114) is a signalling broker adapted for signalling.

## Patentansprüche

1. Maklereinheit (114) für ein erstes IP-Netz (102), das so ausgelegt ist, dass es über mindestens ein Datennetz mit einem zweiten IP-Netz (104) verbunden ist, wobei die Maklereinheit so ausgelegt ist, dass sie als Netzübergang für das erste IP-Netz fungiert, so dass die Übertragung zwischen dem ersten IP-Netz und dem zweiten IP-Netz über die Maklereinheit erfolgt, **dadurch gekennzeichnet, dass**:
die Maklereinheit so ausgelegt ist, dass sie eine Protokollumwandlung zwischen dem ersten IP-Netz und dem zweiten IP-Netz vornimmt, wobei das erste IP-Netz und das zweite IP-Netz nicht miteinander kompatibel sind, und
die Maklereinheit so ausgelegt ist, dass sie unter SCTP und dem M3UA-Benutzeranwendungsprotokoll arbeitet.

2. Maklereinheit nach Anspruch 1, wobei die Maklereinheit (114) von dem ersten IP-Netz (102) und dem zweiten IP-Netz (104) gemeinsam genutzt wird.

3. Maklereinheit nach Anspruch 1, bei der das erste und das zweite IP-Netz (102, 104) mit einer ersten beziehungsweise einer zweiten Maklereinheit (302, 304) ausgestattet sind.

4. Maklereinheit nach Anspruch 3, bei der die Übertragung zwischen dem ersten und dem zweiten IP-Netz (102, 104) über die erste und die zweite Maklereinheit (302, 304) erfolgt.

5. Maklereinheit nach einem der vorhergehenden Ansprüche, bei der es sich bei dem Datennetz (100) um das Internet, ein Intranet oder ein Extranet handelt.

6. Maklereinheit nach einem der vorhergehenden Ansprüche, die des Weiteren einen Verkehrsfilter aufweist.

7. Maklereinheit nach Anspruch 6, bei der der Verkehrsfilter eine Firewall aufweist.

8. Maklereinheit nach einem der vorhergehenden Ansprüche, die des Weiteren einen Lastverteiler aufweist.

9. Maklereinheit nach einem der vorhergehenden Ansprüche, die des Weiteren einen Adressenwähler aufweist.

10. Maklereinheit nach Anspruch 9, bei der der Adressenwähler einen Netzendpunkt auswählt.

11. Maklereinheit nach einem der vorhergehenden Ansprüche, die des Weiteren einen Verbindungsmanager aufweist.

12. Maklereinheit nach einem der vorhergehenden Ansprüche, bei der es sich bei dem ersten und dem zweiten IP-Netz (102, 104) um drahtlose Netze handelt.

13. Maklereinheit nach einem der vorhergehenden Ansprüche, wobei die Maklereinheit (114) so ausgelegt ist, dass sie das Multiplexieren von Verkehr erlaubt.

14. Maklereinheit nach einem der vorhergehenden Ansprüche, wobei es sich bei der Maklereinheit (114) um einen Signalmakler handelt, der für die Signalisierung ausgelegt ist.

15. Verfahren für die Übertragung zwischen einem ersten IP-Netz (102) und einem zweiten IP-Netz (104) über mindestens ein Datennetz (100), wobei das Verfahren das Bereitstellen einer Maklereinheit (114) umfasst, die als Netzübergang für das erste IP-Netz fungiert, so dass die Übertragung zwischen dem ersten und dem zweiten IP-Netz über die Maklereinheit erfolgt, **dadurch gekennzeichnet, dass** das Verfahren des Weiteren Folgendes umfasst:
Vornehmen einer Protokollumwandlung, wenn das erste IP-Netz und das zweite IP-Netz nicht miteinander kompatibel sind, und
Betreiben der Maklereinheit unter SCTP und einem M3UA-Benutzeranwendungsprotokoll.

16. Verfahren nach Anspruch 15, bei dem die Maklereinheit (114) von dem ersten IP-Netz (102) und dem zweiten IP-Netz (104) gemeinsam genutzt wird.

17. Verfahren nach Anspruch 15 oder 16, bei dem das erste und das zweite IP-Netz (102, 104) mit einer ersten beziehungsweise einer zweiten Maklereinheit (302, 304) ausgestattet sind.

18. Verfahren nach einem der Ansprüche 15 bis 17, bei dem es sich bei dem Datennetz (100) um das Internet, ein Intranet oder ein Extranet handelt.

19. Verfahren nach einem der Ansprüche 15 bis 18, bei dem die Maklereinheit (114) die Verkehrsfilterung vornimmt.

20. Verfahren nach Anspruch 19, bei dem die Verkehrsfilterung von einer Firewall vorgenommen wird.

21. Verfahren nach einem der Ansprüche 15 bis 20, bei dem die Maklereinheit die Lastverteilung vornimmt.

22. Verfahren nach einem der Ansprüche 15 bis 21, bei dem die Maklereinheit die Adressauswahl vornimmt.

23. Verfahren nach Anspruch 22, bei dem die Adressauswahl einen Netzendpunkt bestimmt.

24. Verfahren nach einem der Ansprüche 15 bis 23, bei dem die Maklereinheit die Verbindungen verwaltet.

25. Verfahren nach einem der Ansprüche 15 bis 24, bei dem die Maklereinheit (114) das Multiplexieren von Verkehr ermöglicht.

26. Verfahren nach einem der Ansprüche 15 bis 25, bei dem es sich bei der Maklereinheit (114) um einen Signalmakler handelt, der für die Signalisierung ausgelegt ist.

## Revendications

1. Entité courtier (114) pour un premier réseau à protocole IP (102), le premier réseau à protocole IP étant conçu pour communiquer avec un second réseau à protocole IP (104) par le biais d'au moins un réseau de données, où l'entité courtier est conçue pour agir en tant que passerelle pour le premier réseau à protocole IP, de sorte qu'une communication entre le premier réseau à protocole IP et le second réseau à protocole IP se fait par le biais de l'entité courtier, **caractérisée en ce que** :
l'entité courtier est conçue pour exécuter une conversion de protocole entre le premier réseau à protocole IP et le second réseau à protocole IP, le premier réseau à protocole IP et le second réseau à protocole IP n'étant pas compatibles, et
l'entité courtier est conçue pour fonctionner sous le protocole SCTP et le protocole d'application d'utilisateur M3AU.

2. Entité courtier selon la revendication 1, dans laquelle ladite entité courtier (114) est commune au premier réseau à protocole IP (102) et au second réseau au protocole IP (104).

3. Entité courtier selon la revendication 1, dans laquelle les premier et second réseaux (102, 104) sont dotés de première et seconde entités courtiers (302, 304) respectivement.

4. Entité courtier selon la revendication 3, dans laquelle la communication entre les premier et second réseaux à protocole IP (102, 104) se fait par le biais des première et seconde entités courtiers (302, 304).

5. Entité courtier selon l'une quelconque des revendications précédentes, dans laquelle le réseau de données (100) est l'un de : le système Internet, un réseau Intranet ou un réseau Extranet.

6. Entité courtier selon l'une quelconque des revendications précédentes, comprenant en outre un filtre de trafic.

7. Entité courtier selon la revendication 6, dans laquelle le filtre de trafic comprend un pare-feu.

8. Entité courtier selon l'une quelconque des revendications précédentes, comprenant en outre un dispositif d'équilibrage de charge.

9. Entité courtier selon l'une quelconque des revendications précédentes, comprenant en outre un dispositif de sélection d'adresse.

10. Entité courtier selon la revendication 9, dans laquelle le dispositif de sélection d'adresse sélectionne un point d'extrémité de réseau.

11. Entité courtier selon l'une quelconque des revendications précédentes, comprenant en outre un gestionnaire de connexion.

12. Entité courtier selon l'une quelconque des revendications précédentes, dans laquelle les premier et second réseaux à protocole IP (102, 104) sont des réseaux sans fil.

13. Entité courtier selon l'une quelconque des revendications précédentes, dans laquelle l'entité courtier (114) est conçue pour permettre un multiplexage du trafic.

14. Entité courtier selon l'une quelconque des revendications précédentes, dans laquelle l'entité courtier (114) est un courtier de signalisation conçu pour la signalisation.

15. Procédé de communication entre un premier réseau à protocole IP (102) et un second réseau à protocole IP (104) par le biais d'au moins un réseau de données (100), le procédé comprenant la fourniture d'une entité courtier (114), dans lequel l'entité courtier agit en tant que passerelle pour le premier réseau à protocole IP, de sorte que la communication entre les premier et second réseaux à protocole IP se fait par le biais de l'entité courtier, **caractérisé en ce que** le procédé comprend en outre :
la réalisation d'une conversion de protocole si le premier réseau à protocole IP et le second réseau à protocole IP ne sont pas compatibles, et
le fonctionnement de l'entité courtier sous le protocole SCTP et un protocole d'application d'utilisateur M3AU.

16. Procédé selon la revendication 15, dans lequel ladite entité courtier (114) est commune au premier réseau à protocole IP (102) et au second réseau à protocole IP (104).

17. Procédé selon la revendication 15 ou la revendication 16, dans lequel les premier et second réseaux à protocole IP (102, 104) sont dotés de première et seconde entités courtiers (302, 304) respectivement.

18. Procédé selon l'une quelconque des revendications 15 à 17, dans lequel le réseau de données (100) est l'un de : le système Internet, un réseau Intranet ou un réseau Extranet.

19. Procédé selon l'une quelconque des revendications 15 à 18, dans lequel l'entité courtier (114) réalise un filtrage du trafic.

20. Procédé selon la revendication 19, dans lequel le filtrage du trafic est réalisé par un pare-feu.

21. Procédé selon l'une quelconque des revendications 15 à 20, dans lequel l'entité courtier réalise un équilibrage de charge.

22. Procédé selon l'une quelconque des revendications 15 à 21, dans lequel l'entité courtier réalise une sélection d'adresse.

23. Procédé selon la revendication 22, dans lequel la sélection d'adresse identifie un point d'extrémité de réseau.

24. Procédé selon l'une quelconque des revendications 15 à 23, dans lequel l'entité courtier réalise une gestion de connexion.

25. Procédé selon l'une quelconque des revendications 15 à 24, dans lequel l'entité courtier (114) permet un multiplexage du trafic.

26. Procédé selon l'une quelconque des revendications 15 à 25, dans lequel l'entité courtier (114) est un courtier de signalisation conçu pour la signalisation.
